# EUROPÄISCHE PATENTSCHRIFT

(11) **EP 2 872 558 B1**
(45) Veröffentlichungstag und Bekanntmachung des Hinweises auf die Patenterteilung: **18.04.2018**
(21) Anmeldenummer: 13736880.9
(22) Anmeldetag: 09.07.2013
(51) Int. Cl.: C08K 5/3445, C08K 3/04, C08L 15/02, C08L 23/22, B60C 1/00

(54) **ELASTOMERE WERKSTOFFE UND IHRE VERWENDUNG**
ELASTOMERIC MATERIALS AND USE THEREOF
MATÉRIAUX ÉLASTOMÈRES ET LEUR UTILISATION

(30) Priorität: 16.07.2012 DE 102012212422
(43) Veröffentlichungstag der Anmeldung: 20.05.2015
(73) Patentinhaber: Leibniz-Institut für Polymerforschung Dresden e.V., 01069 Dresden (DE)
(72) Erfinder: KAVIMANI NAGAR, Prabhu, 01309 Dresden (DE); JURK, René, 01987 Schwarzheide (DE); STÖCKELHUBER, Klaus Werner, 09599 Freiberg (DE); DAS, Amit, 01069 Dresden (DE); LEUTERITZ, Andreas, 01187 Dresden (DE); HEINRICH, Gert, 30163 Hannover (DE); ADHIKARI, Basudam, Kharagpur 17935 (IN)
(74) Vertreter: Rauschenbach, Marion
(86) Internationale Anmeldenummer: PCT/EP2013/064465
(87) Internationale Veröffentlichungsnummer: WO 2014/012819

(56) Entgegenhaltungen:
- WO-A1-2010/016976
- US-A1- 2006 173 115
- US-A1- 2010 036 023
- US-A1- 2010 096 597
- DATABASE WPI Week 201129 Thomson Scientific, London, GB; AN 2011-E12084 XP002712774, -& WO 2011/045944 A1 (BRIDGESTONE CORP) 21. April 2011 (2011-04-21) -& EP 2 489 697 A1 (BRIDGESTONE CORP [JP]) 22. August 2012 (2012-08-22)

## Beschreibung

Die Erfindung bezieht sich auf das Gebiet der Polymerchemie und betrifft elastomere Werkstoffe, wie sie beispielsweise für Fahrzeugreifen als Innerlinerwerkstoff eingesetzt werden können, und ihre Verwendung.

Moderne Fahrzeugreifen sind aus einer Vielzahl von Bestandteilen aufgebaut. Hauptbestandteil des Fahrzeugreifens ist die so genannte Karkasse, die aus einem Laufband und aus einem als Festigkeitsträger wirkenden Gewebeunterbau besteht. Auf der Innenseite der Karkasse wird radial eine elastomere Schicht aufgebracht, die so genannte Innerlinerschicht oder Innerliner, die dazu dient, das in schlauchlosen Fahrzeugreifen eingebrachte Reifengas möglichst gut einzuschließen, so dass das zwischen Felge und Reifen eingeschlossene Reifengas möglichst nicht und nur sehr langsam durch das Material des Fahrzeugreifen nach außen diffundieren kann. Eine möglichst geringe Gaspermeabilität des Innerliners ist daher wünschenswert, insbesondere auch deshalb, da ein Druckabfall im Reifen sowohl die Rollreibung des Reifens und den damit verbundenen erhöhten Kraftstoffverbrauch, aber auch die Fahrsicherheit und die Haltbarkeit des Reifens negativ beeinflusst. Außerdem dient der Innerliner zum Schutz anderer Reifenkomponenten, wie Karkasse und Stahlgürtel, vor Luft und Feuchtigkeit.

Als Elastomermaterialien für Innerliner werden üblicherweise Synthesekautschuke, wie Butylkautschuk (IIR), Chlorbutylkautschuk (CIIR) oder Brombutylkautschuk (BIIR) verwendet, welche bereits eine geringe Gaspermeabilität aufweisen. Teilweise werden diese Butylkautschuke mit anderen Dienkautschuken verblendet eingesetzt, um beispielsweise eine Verbesserung der mechanischen Eigenschaften oder eine Kostenreduzierung zu erzielen. Weiterhin kann auch die Gaspermeabilität des Werkstoffes durch die Einmischung von Füllstoffpartikeln in die Kautschukmatrix verbessert werden. Insbesondere die Beimischung lamellarer Teilchen, wie beispielsweise von Schichtsilikaten oder Graphenen, verringert durch eine Verlängerung des Diffusionsweges der Gasmoleküle (Tortuosität) die Gaspermeabilität des Materials.

Nach US 2006/0.229.404 ist ein Verfahren zur Herstellung einer Elastomermischung bekannt, bei dem aus einem Elastomer mit expandiertem Graphit Dien-Monomere in Gegenwart von 10 phr oder mehr (parts per 100 parts rubber) Blähgraphit polymerisiert werden, so dass der Graphit durch das Elastomer interkaliert wird.

Auch ist aus US 6.548.585 eine Kautschukmasse zur Herstellung von Innenrohren in Kältemittelschläuchen bekannt. Die Kautschukmasse wird aus einem bromierten Copolymer-Kautschuk, der beispielsweise Poly[Isobutylen-co-p-Methylstyrol] (BIMSM) sein kann, und einem anorganischen lamellaren Füllstoff, der beispielsweise Graphit, Zirkoniumphosphat, Calcogeniden, Talk, Kaolinit, Bentonit, Montmorillonit, Glimmer oder Chlorit sein kann, hergestellt.

Gemäß der US 2010/0.036.023 sind Elastomermaterialien aus graphitischen Nanopartikeln bekannt, die vorzugsweise Graphen-Nanopartikel sind. Derartige Elastomermaterialien werden in Reifenschläuchen als Innerliner eingesetzt.

Weiterhin ist aus US 2005/0215693 ein Verfahren bekannt, durch welches die Vulkanisationseigenschaften von Schichtsilikat/Kautschuk-Systemen verbessert werden sollen. Bei diesem Verfahren wird das Schichtsilikat durch Zusatz einer ionischen Flüssigkeit exfoliert und dann zu der Gummimischung hinzugegeben. Die tensidische ionische Flüssigkeit kompatibilisiert das Schichtsilikat mit dem Kautschuk und reduziert ohne eine wesentliche Beeinträchtigung der Vulkanisationseigenschaften dessen Gaspermeabilität.
Unter einer ionischen Flüssigkeit wird allgemein eine Flüssigkeit verstanden, die ausschließlich aus Ionen besteht. In Abgrenzung zum klassischen Begriff der Salzschmelze, bei der es sich gewöhnlich um ein hochschmelzendes, hochviskoses und meist sehr korrosives Medium handelt, sind ionische Flüssigkeiten bereits bei niedrigen Temperaturen (< 100 °C) flüssig und relativ niedrigviskos (DE 102 43 181 A1). Obwohl ionische Flüssigkeiten bereits seit 1914 bekannt sind, wurden diese doch erst in den letzten 10 Jahren intensiv als Lösungsmittel und/oder Katalysator in organischen Synthesen untersucht (Übersichtsartikel von K. R. Seddon in J. Chem. Technol. Biotechnol. 68(1997), 351-356).

Auch ist aus US 7.572.855 B2 ein Nano-Komposit bekannt, welches einen kationischen Kompatibilisator enthält. Der kationische Kompatibilisator besteht aus einer hydrophoben Gruppe und einer heterocyclischen kationischen Einheit. Dieses Nano-Komposit kann bei Gummi- und Reifenmaterialien dafür eingesetzt werden, um eine verbesserte Gaspermeabilität, verbesserte Vulkanisationseigenschaften und/oder verbesserte mechanischen Eigenschaften zu erzielen.

Die Aufgabe der vorliegenden Erfindung besteht in der Angabe von elastomeren Werkstoffen, die eine geringere Gaspermeabilität aufweisen.

Die Aufgabe wird durch die in den Ansprüchen angegebene Erfindung gelöst. Vorteilhafte Ausgestaltungen sind Gegenstand der Unteransprüche.

Die erfindungsgemäßen elastomeren Werkstoffe enthalten Butyl- und/oder Halobutylkautschuke oder Gemische davon, mit 1 bis 20 phr von mindestens einem flüssigen Imidazoliumsalz und mit 1 bis 40 phr von mindestens einem Füllstoff mit einer graphitischen Struktur.

Auch vorteilhafterweise sind als flüssige Imidazoliumsalze Butyl-3-methyl-imidazolium-bis-(trifluoromethylsulphonyl)-imide, noch vorteilhafterweise 1-butyl-3-methyl-imidazolium-bis-(trifluoromethylsulphonyl-imide), vorhanden.

Weiterhin vorteilhafterweise sind in den elastomeren Werkstoffen 1 bis 5 phr flüssige Imidazoliumsalze vorhanden.

Ebenfalls vorteilhafterweise sind in den elastomeren Werkstoffen 1 bis 20 phr Füllstoffe mit einer graphitischen Struktur vorhanden.

Vorteilhaft ist es auch, wenn als Füllstoff mit einer graphitischen Struktur Graphen vorhanden ist.

Erfindungsgemäß werden die elastomeren Werkstoffe für Elastomerwerkstoffe mit geringer bis sehr geringer Gaspermeabilität verwendet.

Vorteilhafterweise werden die elastomeren Werkstoffe als Innerliner für Fahrzeugreifen verwendet.

Durch die erfindungsgemäße Lösung können erstmals elastomere Werkstoffe angegeben werden, die eine deutlich geringere Gaspermeabilität aufweisen, als andere elastomere Werkstoffe nach dem Stand der Technik.
Dies wird im Wesentlichen dadurch erreicht, dass die elastomeren Werkstoffe neben Butyl- und/oder Halobutylkautschuken oder Gemischen davon, weiterhin 1 bis 20 phr mindestens einem flüssigen Imidazoliumsalz und 1 bis 40 phr mindestens eines Füllstoffs mit einer graphitischen Struktur, insbesondere Graphene, aufweisen.

Ein Einmischen von lamellaren Füllstoffen in Elastomerwerkstoffe vermindert in der Regel deren Gaspermeabilität durch eine Verlängerung des Transportweges der Gasmoleküle (Tortuosität) in der Kautschukmatrix. Dabei ist jedoch wesentlich, dass für eine Verminderung der Gaspermeabilität die einzelnen Füllstoffplättchen sehr gut in der Kautschukmatrix dispergiert sein müssen. Bekanntermaßen neigt Graphen zu einer starken Agglomeration, so dass dessen Einsatz in Elastomerwerkstoffen einen signifikanten Anstieg der Gaspermeabilität des Elastomerwerkstoffs zur Folge hat.

Erfindungsgemäß wird durch die Zugabe und das Vorhandensein von mindestens einem flüssigen Imidazoliumsalz im Elastomerwerkstoff gemeinsam mit dem Füllstoff mit einer graphitischen Struktur dieser Nachteil beseitigt und eine gute bis sehr gute Dispergierung der Füllstoffteilchen im Elastomerwerkstoff erreicht. Dadurch werden wiederum die Transportwege oder Diffusionswege der Gasmoleküle deutlich verlängert und somit die Gaspermeabilität weiter abgesenkt.

Dabei hat sich weiterhin als erfindungswesentlich herausgestellt, dass nur eine Zugabe der flüssigen Imidazoliumsalze und der Füllstoffe in der erfindungsgemäß angegebenen Menge die verbesserte Dispergierung erreicht. Geringere oder höhere Zugaben an flüssigen Imidazoliumsalzen und Füllstoffen mit graphitischer Struktur führen dann wieder zu Agglomerationen der Füllstoffpartikel und erhöhter Gaspermeabilität.
Die flüssigen Imidazoliumsalze wechselwirken auch mit den Füllstoffpartikeloberflächen und führen dadurch zu einer Modifizierung der Oberflächen, was wiederum zu einer Kompatibilisierung des Füllstoffs mit dem Elastomerwerkstoff und zu einer deutlich verbesserten Dispergierung der Füllstoffpartikel führt.

Durch die erfindungsgemäße Lösung kann die Gaspermeabilität von beispielsweise Fahrzeugreifen, die eine Innnerlinerschicht aus den erfindungsgemäßen elastomeren Werkstoffen aufweisen, deutlich verringert werden. Dies kann auch dazu führen, dass die Schichtdicke dieser Innerlinerschicht verringert und somit Material und Gewicht eingespart werden kann.

Nachfolgend wird die Erfindung an einem Ausführungsbeispiel näher erläutert.

### Beispiel 1

Eine Kautschukmischung der Zusammensetzung gemäß Tabelle 1 wurde hergestellt, indem alle Bestandteile miteinander vermischt wurden.

**Tabelle 1**

| Bestandteil | phr |
|---|---|
| Brombutylkautschuk (BIIR) (Lanxess Bromobutyl X2) | 100 |
| Magnesiumoxid (MgO) | 0.5 |
| Graphene Nanoplatelets (GnP) (XGScience xGnP-M-5) | 15 |
| 1 Allyl-3 Methyl-imidazolium-chloride(AMIC) flüssiges Imidazoliumsalz (FI) | 10 |
| Stearinsäure | 1 |
| Paraffinöl | 5 |
| Schwefel (S) | 0.5 |
| Zinkoxid (ZnO) | 3 |
| Dibenzothiazyldisulfid (MBTS) | 1.5 |

Durch Untersuchungen mittels Raman-Spektroskopie konnte nach der Vulkanisation des elastomeren Werkstoffs eine Wechselwirkung zwischen dem flüssigen Imidazoliumsalz und der Oberfläche der Graphen-Nanoplatelets nachgewiesen werden, bei der eine deutliche Verschiebung der G-Bande in einer GnP-FI-Mischung im Vergleich zum reinen GnP festzustellen war.

Tabelle 2 zeigt die Ergebnisse einer Gaspermeationsmessung (Gasdurchlässigkeits-Prüfgerät GDP-C, Brugger Feinmechanik GmbH, München), die an dem Elastomermaterial gemäß Tabelle 1 ohne Graphen und flüssige Imidazoliumsalze (Stand der Technik) und mit unterschiedlichen Gehalten an Graphen (GnP) und flüssigem Imidazoliumsalz (FI) durchgeführt wurden.

**Tabelle 2**

| | Zusammensetzung | Gastransmissionsrate (GTR) [cm³/m²/Tag] |
|---|---|---|
| BIIR-0 | reiner Brombutylkautschuk | 22 |
| BIIR-5GnP-5FI | Brombutylkautschuk mit 5 phr GnP und 5 phr FI | 5.32 |
| BIIR-20GnP-5FI | Brombutylkautschuk mit 20 phr GnP und 5 phr FI | 3.88 |

Es konnte festgestellt werden, dass durch den Einsatz von flüssigen Imidazoliumsalzen, eine Wechselwirkung mit den Graphenoberflächen bewirkt werden konnte, wodurch die Graphenoberflächen modifiziert werden. Dies führt zu einer verbesserten Kompatibilisierung des Graphen mit dem Elastomer und zu einer deutlich verbesserten Deagglomeration und Dispergierung der Graphenpartikel. Die verbesserte Dispersion der Graphenpartikel führt zu einem stark erhöhten Diffusionsweg der Gasmoleküle bei deren Permeation durch das Elastomermaterial.

## Patentansprüche

1. Elastomere Werkstoffe, enthaltend Butyl- und/oder Halobutylkautschuke oder Gemische davon, mit 1 bis 20 phr von mindestens einem flüssigen Imidazoliumsalz und mit 1 bis 40 phr von mindestens einem Füllstoff mit einer graphitischen Struktur.

2. Elastomere Werkstoffe nach Anspruch 1, bei denen als flüssige Imidazoliumsalze Butyl-3-methyl-imidazolium-bis-(trifluoromethylsulphonyl)-imide, wie 1-butyl-3-methyl-imidazolium-bis-(trifluoromethylsulphonyl-imide), vorhanden sind.

3. Elastomere Werkstoffe nach Anspruch 1, bei denen 1 bis 5 phr flüssige Imidazoliumsalze vorhanden sind.

4. Elastomere Werkstoffe nach Anspruch 1, bei denen 1 bis 20 phr Füllstoffe mit einer graphitischen Struktur vorhanden sind.

5. Elastomere Werkstoffe nach Anspruch 1, bei denen als Füllstoff mit einer graphitischen Struktur Graphen vorhanden ist.

6. Verwendung von elastomeren Werkstoffen nach Anspruch 1 für Elastomerwerkstoffe mit geringer bis sehr geringer Gaspermeabilität.

7. Verwendung nach Anspruch 6 als Innerliner für Fahrzeugreifen.

## Claims

1. Elastomeric materials comprising butyl and/or halobutyl rubbers or mixtures thereof, with from 1 to 20 phr of at least one liquid imidazolium salt and with from 1 to 40 phr of at least one filler with a graphitic structure.

2. Elastomeric materials according to Claim 1, in which liquid imidazolium salts present comprise butyl-3-methyl-imidazolium bis(trifluoromethylsulfonyl)imides, for example 1-butyl-3-methyl-imidazolium bis(trifluoromethylsulfonylimide) .

3. Elastomeric materials according to Claim 1, which comprise from 1 to 5 phr of liquid imidazolium salts.

4. Elastomeric materials according to Claim 1, which comprise from 1 to 20 phr of fillers with a graphitic structure.

5. Elastomeric materials according to Claim 1, in which filler with a graphitic structure comprises graphene.

6. Use of elastomeric materials according to Claim 1 for elastomeric materials with low to very low gas-permeability.

7. Use according to Claim 6 as inner liner for tyres.

## Revendications

1. Matériaux élastomères, contenant des caoutchoucs de butyle et/ou d'halobutyle ou leurs mélanges, avec 1 à 20 pce d'au moins un sel d'imidazolium liquide et avec 1 à 40 pce d'au moins une charge ayant une structure graphitique.

2. Matériaux élastomères selon la revendication 1, dans lesquels des bis-(trifluorométhylsulfonyl)-imides de butyl-3-méthyl-imidazolium, tels que des bis-(trifluorométhylsulfonyl-imides) de 1-butyl-3-méthyl-imidazolium, sont présents en tant que sels d'imidazolium liquides.

3. Matériaux élastomères selon la revendication 1, dans lesquels 1 à 5 pce de sels d'imidazolium liquides sont présents.

4. Matériaux élastomères selon la revendication 1, dans lesquels 1 à 20 pce de charges ayant une structure graphitique sont présentes.

5. Matériaux élastomères selon la revendication 1, dans lesquels du graphène est présent en tant que charge ayant une structure graphitique.

6. Utilisation de matériaux élastomères selon la revendication 1 pour des matériaux élastomères à perméabilité aux gaz faible à très faible.

7. Utilisation selon la revendication 6 en tant que revêtement intérieur pour pneus automobiles.
